# EUROPÄISCHE PATENTSCHRIFT

(11) **EP 1 593 866 B1**
(45) Veröffentlichungstag und Bekanntmachung des Hinweises auf die Patenterteilung: **13.06.2007**
(21) Anmeldenummer: 05007160.4
(22) Anmeldetag: 01.04.2005
(51) Int. Cl.: F16C 33/66

(54) **Radlagerung für eine Fahrzeugachse sowie Hülse für den Einsatz in einer solchen Radlagerung**
Wheel bearing for a vehicle axle and sleeve for use in such a wheel bearing
Palier de roue pour essieu de véhicule et entretoise à utiliser dans un tel palier

(30) Priorität: 08.05.2004 DE 102004022841
(43) Veröffentlichungstag der Anmeldung: 09.11.2005
(73) Patentinhaber: BPW Bergische Achsen KG, 51674 Wiehl (DE)
(72) Erfinder: Ebert, Jörg, 50858 Köln (DE); Leidig, Hans-Josef, 51580 Reichsdorf (DE)
(74) Vertreter: Christophersen & Partner

(56) Entgegenhaltungen:
- DE-A1- 4 336 075
- US-A- 2 368 963
- US-A- 5 391 004

## Beschreibung

Die Erfindung betrifft eine Radlagerung für eine Fahrzeugachse, vorzugsweise für eine Anhängerachse, mit einer der Befestigung eines Fahrzeugrades dienenden Nabe, die mittels mindestens eines aus einem Innenring, einem Außenring und Wälzkörpern bestehenden Wälzlagers drehbar auf der Achse gelagert ist, und mit einer axial gegen das Wälzlager abgestützten, einen Schmiermittelvorrat für das Wälzlager umschließenden Hülse.

Des weiteren betrifft die Erfindung eine Hülse für den Einsatz in einem zwischen einem vorderen und einem hinteren Wälzlager einer Radlagerung für eine Fahrzeugachse angeordneten Ringraum.

Eine Radlagerung sowie eine Hülse mit den vorgenannten Merkmalen ist aus der US 6,533,363 bekannt. In dem Ringraum zwischen dem vorderen und dem hinteren Wälzlager der Radlagerung erstreckt sich eine Hülse, welche sich mit ihrer inneren Stirnfläche an dem vorderen Wälzlager, und mit ihrer äußeren Stirnfläche an dem hinteren Wälzlager abstützt. Zu dem die Wälzlager tragenden Achsschenkel der Fahrzeugachse weist die Hülse einen radialen Abstand, wodurch die Hülse innen eine Kammer umschließt, in welcher sich Schmiermittel für die Wälzlager befindet. Nachteilig bei der Radlagerung nach der US 6,533,363 ist deren, was das Befüllen mit Schmiermittel anbetrifft, wenig wartungsfreundliche Konstruktion. Eine weitere Radlagerung bzw. Hülse gemäß den Oberbegriffen der Ansprüche 1 und 11 ist aus US 2368963 bekannt.

Der Erfindung liegt daher die **Aufgabe** zugrunde, eine Radlagerung für eine Fahrzeugachse und insbesondere für eine Anhängerachse zu schaffen, die sich durch eine wartungsfreundliche Schmierung mit zwecks der Vermeidung von Über- und Unterschmierungen gut dosierbarer Schmiermittelmenge auszeichnet. Ferner soll eine Hülse für den Einsatz in einem Ringraum zwischen einem vorderen und einem hinteren Wälzlager geschaffen werden, welche zur Lösung der genannten Aufgabe beiträgt.

Zur **Lösung** der Aufgabe wird hinsichtlich einer Radlagerung mit den eingangs angegebenen Merkmalen vorgeschlagen, daß die Hülse nach Art einer Ringpatrone ausgebildet ist und dass mindestens eine ihrer beiden Wände einen verformbaren Wandabschnitt aufweist, welcher der Hülse ein in Längsrichtung federelastisches Verhalten verleiht

Durch die Doppelwandigkeit der erfindungsgemäßen Hülse ergibt sich eine hinsichtlich Größe und Geometrie definierte Ringkammer, welche das zur Schmiermittelversorgung der Wälzlager erforderliche Fett aufnimmt. Aus dieser Ringkammer kann das Schmiermittel direkt zu dem angrenzenden Wälzlager gelangen, da die Ringkammer zu dem angrenzenden Wälzlager hin offen gestaltet ist. Es ergibt sich somit eine besonders wartungsfreundliche Schmierung, bei der das Schmiermittel in der als einstückiges Bauteil handhabbaren Ringpatrone bevorratet ist. Der erforderliche Schmiermittelvorrat ist daher fertig konfektioniert bevorratet, was eine besonders wartungsfreundliche Schmierung ermöglicht, insbesondere unter Verzicht auf das bisher übliche Einspritzen des Schmiermittels, z. B. durch sogenannte Fettduschen. Durch die vorab mögliche Konfektionierung des Schmiermittels in der Ringpatrone läßt sich ferner die Schmierstoffmenge exakt vordosieren, so daß Über- oder Unterschmierungen vermieden werden.

Zu Wartungsarbeiten wird die Hülse bzw. Ringpatrone der Radlagerung entnommen und entweder, mit frischem Schmiermittel versehen, wieder in die Radlagerung eingesetzt, oder durch eine andere, bereits fertig vorkonfektionierte Hülse mit darin enthaltenem Schmierfett ersetzt. Die Verwendung der Hülse ähnelt daher einer Kartusche.

Gemäß einer bevorzugten Ausgestaltung der Radlagerung ist diese durch ein vorderes und ein hiervon getrenntes hinteres Wälzlager gekennzeichnet, wobei sich die Hülse mit ihrem einen Ende axial gegen das vordere, und mit ihrem anderen Ende axial gegen das hintere Wälzlager abstützt. Auf diese Weise enthält die Hülse den Schmiermittelvorrat sowohl für das fahrzeugaußen angeordnete vordere, wie auch für das fahrzeuginnen angeordnete hintere Wälzlager. In diesem Fall ist es von zusätzlichem Vorteil, in der Hülse zwei Ringkammern auszubilden, von denen die eine Ringkammer zu dem vorderen, und die andere Ringkammer zu dem hinteren Wälzlager hin offen ist. Dies schließt nicht aus, daß die beiden Ringkammern miteinander verbunden sein können. Dies kann z. B. in der Weise erfolgen, daß die Wände der Hülse zwar durch eine Querwand miteinander verbunden sind, welche die Ringkammern voneinander trennt, jedoch zugleich über den Umfang verteilt mit Öffnungen versehen ist, durch welche Öffnungen die Ringkammern miteinander in Verbindung stehen.

Von besonderem Vorteil ist eine Ausgestaltung der Radlagerung, bei der sich die Hülse gegen die Außenringe des vorderen und des hinteren Wälzlagers abstützt. Wenn die Außenringe in der Nabe und damit in dem drehenden Teil der Fahrzeugachse sitzen, erfährt auch die Hülse diese Drehbewegung. Das in der Hülse enthaltene Schmiermittel unterliegt auf diese Weise der Zentrifugalwirkung der drehenden Nabe und gelangt besser an die zu schmierenden Stellen der Wälzlager.

Vorzugsweise weisen beide Wände der Hülse solche verformbaren Wandabschnitte auf, wobei der Formänderungswiderstand des Wandabschnitts der äußeren Wand größer als der Formänderungswiderstand des Wandabschnitts der inneren Wand ist. Dies hat zur Folge, daß die Hülse mit der außen angeordneten Nabe umläuft und sich die bereits beschrieben Zentrifugalwirkung auf das darin enthaltene Schmiermittel einstellt. Mit ihren inneren Stirnflächen schleift die Hülse z. B. an den Innenringen der Wälzlager entlang, wobei der Verschleiß aufgrund der optimalen Fettung sehr gering bleibt.

Mit der Erfindung wird ferner zur Lösung der oben angegebenen Aufgabe eine Hülse für den Einsatz in einem zwischen einem vorderen und einem hinteren Wälzlager einer Radlagerung für eine Fahrzeugachse angeordneten Ringraum vorgeschlagen, welche Hülse doppelwandig nach Art einer Ringpatrone ausgebildet ist mit einer zwischen ihren beiden Wänden ausgebildeten Ringkammer, die zu den Wälzkörpern des angrenzenden Wälzlagers hin offen ist.

Wiederum werden von den beiden Wänden vorzugsweise zwei hintereinander angeordnete Ringkammern eingeschlossen, die zu ihren jeweiligen Stirnseiten hin offen sind, so daß das in der Ringpatrone bevorratete Schmiermittel sowohl zu dem einen, wie auch zu dem anderen Wälzlager gelangen kann.

Um die Hülse als Schmiermittelkartusche bzw. Schmiermittelpatrone einsetzen zu können, enthält diese gemäß einer weiteren Ausgestaltung eine Schmiermittelfüllung, und die stirnseitigen Öffnungen der Ringkammern sind bis zum Einsatz der Ringpatrone durch einen Deckel oder eine abziehbare Folie verschlossen. Die Hülse wird daher bereits herstellerseitig mit Schmiermittel befüllt, und ihre Stirnöffnungen werden dann zunächst mittels eines Deckels oder einer abziehbaren Folie verschlossen. Unmittelbar vor dem Einsetzen der Hülse in die Radlagerung werden diese Verschlußdeckel abgenommen bzw. die Folien abgezogen, wodurch die Hülse einsetzbar ist, ohne daß der Benutzer mit dem darin enthaltenen Schmiermittel in Berührung kommt.

Schließlich wird zur Vergrößerung des in der Ringpatrone vorrätigen Schmiermittelvolumens vorgeschlagen, daß zumindest eine der Ringkammern eine in Bezug auf die Ringkammer axial teleskopierbare Zusatzkammer aufweist. Beim Einsetzen der Hülse in die Radlagerung wird diese Zusatzkammer teleskopartig in die eigentliche Ringkammer hinein gedrückt, wodurch sich das Volumen verringert und das enthaltene Fett hinaus gedrückt wird.

Weitere Vorteile und Einzelheiten der Erfindung werden nachfolgend unter Bezugnahme auf die Zeichnungen erläutert. Auf der Zeichnung zeigen:
- Fig. 1: einen Längsschnitt durch eine erfindungsgemäße Radlagerung mit einer mittels Wälzlagern auf einem drehfesten Achsschenkel montierten Nabe;
- Fig. 2: eine perspektivische Ansicht einer den Schmiermittelvorrat für die Wälzlager aufnehmenden, nach Art einer Kartusche bzw. Ringpatrone gestalteten Hülse;
- Fig. 3: einen vergrößerten Längsschnitt durch die Hülse;
- Fig. 4: die Hülse gemäß Fig. 3 mit durch einen Deckel bzw. eine Abziehfolie verschlossenen Enden;
- Fig. 5: eine weitere Ausführungsform der erfindungsgemäßen Radlagerung unter Verwendung einer Hülse mit teleskopierbarem Einsatz und
- Fig.6: eine Einzeldarstellung der in Fig. 5 verwendeten Hülse mit teleskopierbarem Einsatz.

Die anhand eines Ausführungsbeispiels dargestellte Radlagerung umfaßt eine Nabe 1, die mit einem Befestigungsflansch 1.1 für ein auf der Zeichnung nicht dargestelltes Bremselement und/oder für ein Fahrzeugrad versehen ist. Bei dem Bremselement kann es sich z. B. um eine Bremstrommel oder eine Bremsscheibe handeln. Im Inneren der Nabe 1 sind zwei Wälzlager 2 und 3 angeordnet, die beim Ausführungsbeispiel als Kegelrollenlager mit unterschiedlichen Durchmessern ausgebildet sind. Das vordere, d. h. am Fahrzeug weiter außen angeordnete Wälzlager 2 hat einen kleineren Durchmesser als das hintere Wälzlager 3. Beide Wälzlager 2 und 3 bestehen jeweils aus einem Innenring 2.1 bzw. 3.1, einem Außenring 2.2 bzw. 3.2 und Kegelrollen 2.3 bzw. 3.3, wobei die Kegelrollen in üblicher Weise jeweils durch einen Käfig gehalten sind und in den Wälzköperbahnen der Innenringe und Außenringe ablaufen.

Die Innenringe 2.1 und 3.1 der beiden Wälzlager sitzen jeweils auf einem zylindrischen Lagersitz eines Achsschenkels 4, welcher das äußere Ende eines Achskörpers der Fahrzeugachse bildet. Der Achskörper mit dem Achsschenkel 4 ist drehfest, wohingegen die Nabe 1 über die Wälzlager 2 und 3 frei drehbar angeordnet ist. Die beschriebene Radlagerung findet daher bei einer nicht-angetriebenen Fahrzeugachse Anwendung, insbesondere einer Schwerlastachse für einen Nutzfahrzeug-Anhänger.

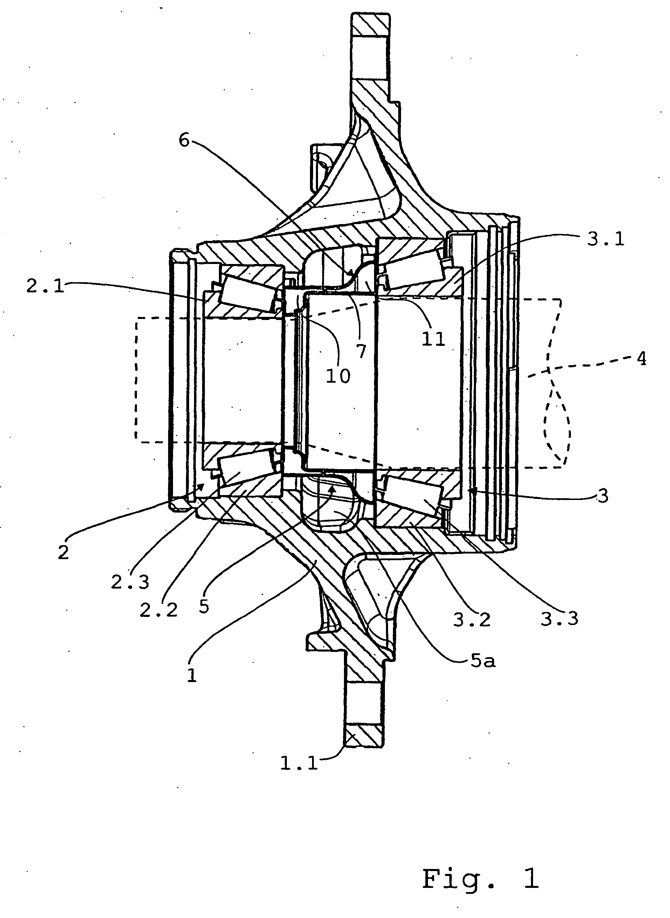

Wie weiterhin aus Fig. 1 ersichtlich, ist in dem Ringraum 5 a zwischen dem vorderen Wälzlager 2 und dem hinteren Wälzlager 3, den Achsschenkel 4 umgebend, eine Hülse 5 angeordnet. Diese dient der Schmiermittelversorgung der Wälzlager. Die Hülse 5 ist doppelwandig mit einer inneren Wand 7 und einer zu der inneren Wand 7 konzentrischen äußeren Wand 6. Die beiden Wände 6, 7 sind durch eine Querwand 8 miteinander verbunden. Die Querwand 8 teilt daher das Volumen der Hülse 5 in eine erste Ringkammer 10 auswärts der Querwand 8, und eine zweite Ringkammer 11 einwärts der Querwand 8. Aufgrund ihrer Gestalt und Verwendung läßt sich die Hülse auch als Kartusche oder Ringpatrone bezeichnen.

Für den Einsatz der Hülse 5 ist sowohl deren erste Ringkammer 10 wie auch die zweite Ringkammer 11 möglichst vollständig mit Fett gefüllt. Da überdies die erste Ringkammer 10 zu dem vorderen Wälzlager 2, und die zweite Ringkammer 11 zu dem hinteren Wälzlager 3 hin offen ist, kann das Schmiermittel aus den Ringkammern 10, 11 ohne weiteres in die benachbart angeordneten Wälzlager 2, 3 und dort insbesondere in den Bereich der Wälzkörper 2.3, 3.3 gelangen.

Fig. 1 läßt ferner erkennen, daß die doppelwandige Hülse 5 mit ihren Enden bzw. Stirnseiten sowohl an den Außenringen 2.2, 3.2 als auch an den Innenringen 2.1, 3.1 anliegt.

Dieses Anliegen ist vorzugsweise dergestalt, daß die Axialkraft, mit welcher sich die äußere Wand 6 der Hülse an den Außenringen 2.2, 3.2 abstützt, größer ist als die Axialkraft, mit welcher sich die innere Wand 7 der Hülse an den Innenringen 2.1, 3.1 abstützt. Diese unterschiedlich große Abstützkraft ist durch die Geometrie der Hülse 5 in Verbindung mit den darin wirkenden Verformungskräften bedingt, worauf später noch näher eingegangen wird.

Fig. 2 zeigt die Hülse 5 in einer perspektivischen Einzelansicht. Diese ist nach Art einer Doppelhülse gestaltet mit großzügigen Öffnungen 13 zwischen den Rändern der beiden zueinander konzentrischen Wände 6, 7 der Hülse. Durch diese großzügigen Öffnungen 13 kann das in den Ringkammern enthaltene Schmiermittel in das angrenzende Wälzlager austreten.

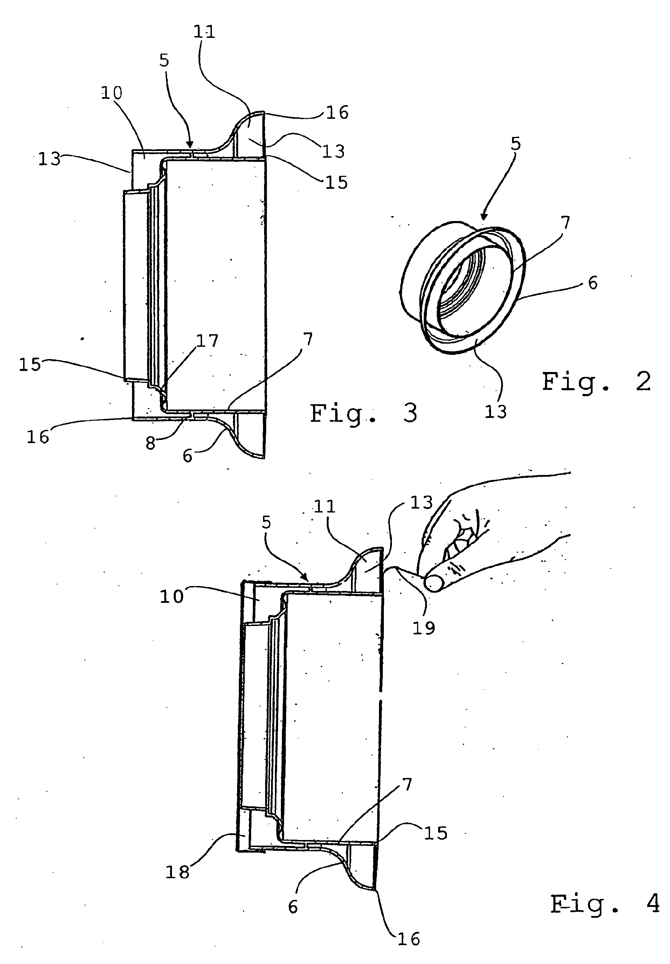

Fig. 3 zeigt die Hülse in einer Schnittdarstellung. Die innere Wand 7 ist mit einem Wandabschnitt 17 versehen, welcher, z. B. durch im Schnitt S-förmige Gestaltung, ein in Längsrichtung der Hülse federelastisches Verhalten aufweist. Infolge dieses elastisch nachgiebigen Wandabschnitts 17 ist die Wand 7 in Längsrichtung stauchbar. Auch die äußere Wand 6 der Hülse kann einen entsprechend axial nachgiebigen Wandabschnitt aufweisen. Von Vorteil ist, wenn die Gestaltung der Wände 6, 7 und deren verformbarer Wandabschnitte so ausgelegt wird, daß der Formänderungswiderstand des Wandabschnitts der äußeren Wand 6 größer als der Formänderungswiderstand des Wandabschnitts 17 der inneren Wand 7 ist. Dies führt dazu, daß sich die Hülse 5 mit den Außenringen 2.2, 3.2 der Wälzlager 2, 3 und damit mit Nabengeschwindigkeit dreht. Das Mitdrehen der Hülse 5 führt zu einer entsprechenden Zentrifugalkraft auf das darin enthaltene Fett, wodurch dieses leichter über die stirnseitigen Öffnungen 13 austritt und in die angrenzenden Wälzlager gelangen kann. Die Ränder 15 der inneren Wand 7 liegen hierbei an den Innenringen der angrenzenden Wälzlager an, wohingegen sich die Ränder 16 der äußeren Wand 6 an den Außenringen der angrenzenden Wälzlager abstützen.

Die in Fig. 3 eingezeichnete Länge L der Hülse 5 ist also vorzugsweise größer, als der Innenabstand zwischen den Wälzlagern 2, 3. Dies führt bei der Montage der Hülse dazu, daß diese gestaucht wird, insbesondere in den federnden Wandabschnitten 17. Die Stauchung führt ferner zu einer Volumenänderung der beiden Ringkammern 10, 11, und damit zu einem Hinausdrücken des Fetts aus den Öffnungen 13.

Fig. 4 zeigt, ebenfalls in einer Schnittdarstellung, eine als Kartusche bzw. Ringpatrone bereits vorbereitete Hülse 5 mit darin enthaltener Fettfüllung. In dieser Ausführung wird die Hülse 5 zwecks Wartungsarbeiten an der Radlagerung angeboten. Die Öffnungen 13 der beiden Ringkammern 10, 11 sind durch einen Deckel oder durch eine abziehbare Folie verschlossen, um einen vorzeitigen Fettaustritt zu verhindern. Links in Fig. 4 ist entsprechend ein Deckel 18 eingezeichnet, rechts in der Fig. 4 eine an den Rändern 15, 16 haftende, von Hand abziehbare Folie 19.

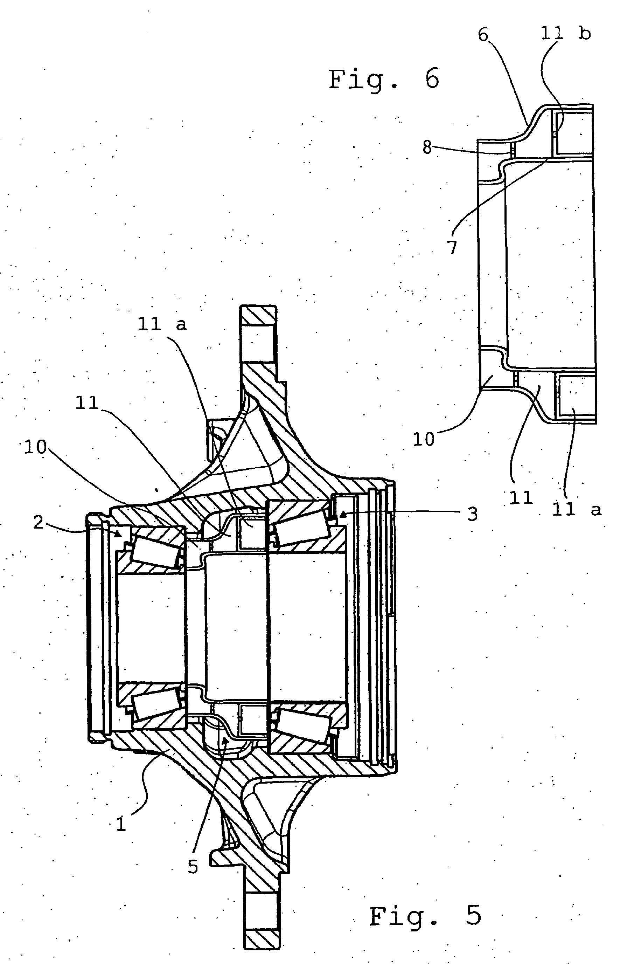

Bei der Ausführungsform nach den Fign. 5 und 6 ist zur Vergrößerung des Schmiermittelvolumens die Ringkammer 11 mit einer zu dieser Ringkammer 11 teleskopierbaren Zusatzkammer 11 a versehen. Herstellerseitig sind alle Kammern 10, 11, 11 a mit Schmiermittel gefüllt, wobei die Zusatzkammer 11 a weitest möglich aus der Ringkammer 11 herausgefahren ist. Bei der Montage der Kartusche wird die Zusatzkammer 11 a zwangsläufig in die Ringkammer 11 hinein gedrückt, wodurch sich das effektive Gesamtvolumen der Kammern 11, 11 a verringert, und Fett aus der Öffnung 13 austritt. Zum Volumenausgleich ist der Boden der Zusatzkammer 11 a mit Überströmöffnungen 11 b versehen. Auch die Hülse bzw. Kartusche nach Fig. 6 erfährt bei ihrem Einsetzen in die Radlagerung eine Stauchung, verbunden mit einem zwangsläufigen axialen Austreten des Schmiermittels.

### Bezugszeichenliste

- 1: Nabe
- 1.1: Befestigungsflansch
- 2: vorderes Wälzlager
- 2.1: Innenring
- 2.2: Außenring
- 2.3: Kegelrollen
- 3: hinteres Wälzlager
- 3.1: Innenring
- 3.2: Außenring
- 3.3: Kegelrollen
- 4: Achsschenkel
- 5: Hülse, Ringpatrone
- 5 a: Ringraum
- 6: äußere Wand der Hülse
- 7: innere Wand der Hülse
- 8: Querwand der Hülse
- 10: Ringkammer
- 11: Ringkammer
- 11 a: Zusatzkammer
- 11 b: Überströmöffnung
- 13: Öffnung
- 15: Rand
- 16: Rand
- 17: Wandabschnitt
- 18: Deckel
- 19: Abreißfolie

- L: Länge

## Patentansprüche

1. Radlagerung für eine Fahrzeugachse, vorzugsweise für eine Anhängerachse, mit einer der Befestigung eines Fahrzeugrades dienenden Nabe (1), die mittels mindestens eines Wälzlagers (2, 3) drehbar auf der Achse gelagert ist, und mit einer axial gegen das Wälzlager (2, 3) abgestützten, einen Schmiermittelvorrat für das Wälzlager umschließenden Hülse (5), wobei die Hülse (5) doppelwandig ausgebildet ist mit einer zwischen ihren beiden Wänden (6, 7) ausgebildeten Ringkammer (10, 11), die zu den Wälzkörpern des angrenzenden Wälzlagers (2, 3) hin offen ist,
**dadurch gekennzeichnet,**
**daß** mindestens eine der beiden Wände (6, 7) der nach Art einer Ringpatrone ausgebildeten Hülse (5) einen verformbaren Wandabschnitt (17) aufweist, welcher der Hülse (5) ein in Längsrichtung federelastisches Verhalten verleiht.

2. Radlagerung nach Anspruch 1, **dadurch gekennzeichnet, daß** die Wände (6, 7) der Hülse durch eine Querwand (8) miteinander verbunden sind.

3. Radlagerung nach Anspruch 1, **gekennzeichnet durch** ein vorderes Wälzlager (2) und ein hiervon getrenntes hinteres Wälzlager (3), wobei sich die Hülse (5) mit ihrem einen Ende axial gegen das vordere, und mit ihrem anderen Ende axial gegen das hintere Wälzlager abstützt.

4. Radlagerung nach Anspruch 3, **dadurch gekennzeichnet, daß** von den beiden Wänden (6, 7) der Hülse (5) zwei Ringkammern (10, 11) umschlossen werden, von denen die eine Ringkammer (10) zu den Wälzkörpern des vorderen, und die andere Ringkammer (11) zu den Wälzkörpern des hinteren Wälzlagers (3) hin offen ist.

5. Radlagerung nach Anspruch 4, **dadurch gekennzeichnet, daß** die Wände (6, 7) der Hülse (5) durch eine Querwand (8) miteinander verbunden sind, die zugleich die Ringkammern (10, 11) voneinander trennt.

6. Radlagerung nach Anspruch 5, **dadurch gekennzeichnet, daß** die Querwand (8) über ihren Umfang verteilt mit Öffnungen versehen ist, durch welche Öffnungen die Ringkammern (10, 11) miteinander verbunden sind.

7. Radlagerung nach einem der Ansprüche 3 bis 6, **dadurch gekennzeichnet, daß** sich die Hülse (5) gegen die Außenringe (2.2, 3.2) des vorderen (2) und des hinteren Wälzlagers (3) abstützt.

8. Radlagerung nach Anspruch 7, **dadurch gekennzeichnet, daß** sich die jeweiligen Enden (16) der äußeren (6) der beiden Wände der Hülse (5) gegen die Außenringe (2.2, 3.2) des vorderen bzw. des hinteren Wälzlagers abstützen.

9. Radlagerung nach einem der Ansprüche 3 bis 8, **dadurch gekennzeichnet, daß** sich die jeweiligen Enden (16) der inneren (7) der beiden Wände der Hülse (5) gegen die Innenringe (2.1, 3.1) des vorderen bzw. des hinteren Wälzlagers abstützen.

10. Radlagerung nach Anspruch 1, **dadurch gekennzeichnet, daß** beide Wände (6, 7) der Hülse (5) verformbare Wandabschnitte (17) aufweisen, welche der Hülse ein in Längsrichtung federelastisches Verhalten verleihen, wobei der Formänderungswiderstand des Wandabschnitts der äußeren Wand (6) größer als der Formänderungswiderstand des Wandabschnitts (17) der inneren Wand (7) ist.

11. Hülse für den Einsatz in einem zwischen einem vorderen und einem hinteren Wälzlager einer Radlagerung für eine Fahrzeugachse angeordneten Ringraum (5 a), die doppelwandig ausgebildet ist mit einer zwischen ihren beiden Wänden (6, 7) ausgebildeten Ringkammer (10, 11), die zu den Wälzkörpern des angrenzenden Wälzlagers (2, 3) hin offen ist,
**dadurch gekennzeichnet,**
**daß** die Hülse nach Art einer Ringpatrone ausgebildet ist, und daß mindestens eine der beiden Wände (6, 7) einen verformbaren Wandabschnitt (17) aufweist, welcher der Hülse ein in Längsrichtung federelastisches Verhalten verleiht.

12. Hülse nach Anspruch 11, **dadurch gekennzeichnet, daß** von den beiden Wänden (6, 7) zwei hintereinander angeordnete Ringkammern (10, 11) eingeschlossen werden, die zu ihren jeweiligen Stirnseiten hin offen sind.

13. Hülse nach Anspruch 12, **dadurch gekennzeichnet, daß** die Wände (6, 7) der Hülse durch eine Querwand (8) miteinander verbunden sind, die zugleich die Ringkammern (10, 11) voneinander trennt.

14. Hülse nach Anspruch 13, **dadurch gekennzeichnet, daß** die Querwand (8) über ihren Umfang verteilt mit Öffnungen versehen ist, durch welche Öffnungen die Ringkammern (10, 11) miteinander verbunden sind.

15. Hülse nach einem der Ansprüche 11 bis 14, **dadurch gekennzeichnet, daß** ihre beiden Wände (6, 7) verformbare Wandabschnitte (17) aufweisen, welche der Hülse ein in Längsrichtung federelastisches Verhalten verleihen, wobei der Formänderungswiderstand des Wandabschnitts der äußeren Wand (6) größer als der Formänderungswiderstand des Wandabschnitts (17) der inneren Wand (7) ist.

16. Hülse nach einem der Ansprüche 11 bis 15, **dadurch gekennzeichnet, daß** diese eine Schmiermittelfüllung enthält, und daß die stirnseitigen Öffnungen (13) der Ringkammern (10, 11) mittels eines Deckels (18) oder einer abziehbaren Folie (19) verschlossen sind.

17. Hülse nach einem der Ansprüche 11 bis 16, **dadurch gekennzeichnet, daß** zur Vergrößerung des Schmiermittelvolumens zumindest eine der Ringkammern (11) eine in Bezug auf die Ringkammer (11) axial teleskopierbare Zusatzkammer (11 a) aufweist.

## Claims

1. Wheel bearing for a vehicle axle, preferably for a trailer axle, comprising a hub (1) which serves for the attachment of a vehicle wheel and which is mounted rotatably on the axle by means of at least one rolling bearing (2, 3), and comprising a sleeve (5) which is supported axially against the rolling bearing (2, 3) and encloses a lubricant reservoir for the rolling bearing, wherein the sleeve (5) is double-walled with an annular chamber (10, 11) formed between its two walls (6, 7), said annular chamber being open towards the rolling bodies of the adjoining rolling bearing (2, 3),
**characterised**
**in that** at least one of the two walls (6, 7) of the sleeve (5) designed in the manner of an annular cartridge has a deformable wall section (17) which gives the sleeve (5) a spring-elastic behaviour in the longitudinal direction.

2. Wheel bearing according to claim 1, **characterised in that** the walls (6, 7) of the sleeve are connected to one another by a transverse wall (8).

3. Wheel bearing according to claim 1, **characterised by** a front rolling bearing (2) and a rear rolling bearing (3) which is separate therefrom, wherein the sleeve (5) is supported with its one end against the front rolling bearing and with its other end against the rear rolling bearing.

4. Wheel bearing according to claim 3, **characterised in that** the two walls (6, 7) of the sleeve (5) enclose two annular chambers (10, 11), of which one annular chamber (10) is open towards the rolling bodies of the front rolling bearing and the other annular chamber (11) is open towards the rolling bodies of the rear rolling bearing (3).

5. Wheel bearing according to claim 4, **characterised in that** the walls (6, 7) of the sleeve (5) are connected to one another by a transverse wall (8), which at the same time separates the annular chambers (10, 11) from one another.

6. Wheel bearing according to claim 5, **characterised in that** the transverse wall (8) is provided with openings distributed over its circumference, through which openings the annular chambers (10, 11) are connected to one another.

7. Wheel bearing according to one of claims 3 to 6, **characterised in that** the sleeve (5) is supported against the outer rings (2.2, 3.2) of the front (2) and rear rolling bearing (3).

8. Wheel bearing according to claim 7, **characterised in that** the respective ends (16) of the outer (6) of the two walls of the sleeve (5) are supported against the outer rings (2.2, 3.2) of the front and rear rolling bearing.

9. Wheel bearing according to one of claims 3 to 8, **characterised in that** the respective ends (16) of the inner (7) of the two walls of the sleeve (5) are supported against the inner rings (2.1, 3.1) of the front and rear rolling bearing.

10. Wheel bearing according to claim 1, **characterised in that** the two walls (6, 7) of the sleeve (5) have deformable wall sections (17) which give the sleeve a spring-elastic behaviour in the longitudinal direction, wherein the deformation resistance of the wall section of the outer wall (6) is greater than the deformation resistance of the wall section (17) of the inner wall (7).

11. Sleeve for use in an annular space (5a) arranged between a front and a rear rolling bearing of a wheel bearing for a vehicle axle, said annular space being double-walled with an annular chamber (10, 11) formed between its two walls (6, 7), said annular chamber being open towards the rolling bodies of the adjoining rolling bearing (2, 3),
**characterised**
**in that** the sleeve is designed in the manner of an annular cartridge, and in that at least one of the two walls (6, 7) have a deformable wall section (17) which gives the sleeve a spring-elastic behaviour in the longitudinal direction.

12. Sleeve according to claim 11, **characterised in that** the two walls (6, 7) enclose two annular chambers (10, 11) which are arranged one behind the other and which are open towards their respective end sides.

13. Sleeve according to claim 12, **characterised in that** the walls (6, 7) of the sleeve are connected to one another by a transverse wall (8), which at the same time separates the annular chambers (10, 11) from one another.

14. Sleeve according to claim 13, **characterised in that** the transverse wall (8) is provided with openings distributed over its circumference, through which openings the annular chambers (10, 11) are connected to one another.

15. Sleeve according to one of claims 11 to 14, **characterised in that** its two walls (6, 7) have deformable wall sections (17) which give the sleeve a spring-elastic behaviour in the longitudinal direction, wherein the deformation resistance of the wall section of the outer wall (6) is greater than the deformation resistance of the wall section (17) of the inner wall (7).

16. Sleeve according to one of claims 11 to 15, **characterised in that** it contains a lubricant filling, and **in that** the openings (13) at the end sides of the annular chambers (10, 11) are closed by means of a cover (18) or a peel-off film (19).

17. Sleeve according to one of claims 11 to 16, **characterised in that**, in order to increase the volume of lubricant, at least one of the annular chambers (11) has an additional chamber (11a) which can be extended telescopically in the axial direction with respect to the annular chamber (11).

## Revendications

1. Palier de roue pour un essieu de véhicule, de préférence pour un essieu de remorque, avec un moyeu (1), servant à fixer une roue de véhicule, qui est supporté en rotation sur l'essieu au moyen d'au moins un palier à roulement (2, 3), et avec une douille (5) qui est en appui axial contre le palier à roulement (2, 3) et qui renferme une provision d'agent lubrifiant pour le palier à roulement, la douille (5) étant réalisée à double paroi avec une chambre annulaire (10, 11), formée entre ses deux parois (6, 7), qui est ouverte en direction des éléments de roulement du palier à roulement (2, 3) adjacent,
**caractérisé en ce que**
l'une au moins des deux parois (6, 7) de la douille (5) réalisée en forme de cartouche annulaire présente un segment de paroi déformable (17) qui confère à la douille (5) un comportement de ressort élastique dans le sens longitudinal

2. Palier de roue selon la revendication 1, **caractérisé en ce que** les parois (6, 7) de la douille sont reliées entre elles par une paroi transversale (8).

3. Palier de roue selon la revendication 1, **caractérisé par** un palier à roulement avant (2) et un palier à roulement arrière (3) séparé de celui-ci, la douille (5) étant en appui axial à l'une de ses extrémités contre le palier à roulement avant et en appui axial à son autre extrémité contre le palier à roulement arrière.

4. Palier de roue selon la revendication 3, **caractérisé en ce que** les deux parois (6, 7) de la douille (5) entourent deux chambres annulaires (10, 11), l'une des chambres annulaires (10) étant ouverte en direction des éléments de roulement du palier à roulement avant (2) et l'autre chambre annulaire (11) ouverte en direction des éléments de roulement du palier à roulement arrière (3).

5. Palier de roue selon la revendication 4, **caractérisé en ce que** les parois (6, 7) de la douille (5) sont reliées entre elles par une paroi transversale (8) qui en même temps sépare les chambres annulaires (10, 11) l'une de l'autre.

6. Palier de roue selon la revendication 5, **caractérisé en ce que** la paroi transversale (8) est munie d'ouvertures, réparties sur sa circonférence, par le biais desquelles les chambres annulaires (10, 11) sont reliées entre elles.

7. Palier de roue selon l'une des revendications 3 à 6, **caractérisé en ce que** la douille (5) est en appui contre les bagues extérieures (2.2, 3.2) du palier à roulement avant (2) et arrière (3).

8. Palier de roue selon la revendication 7, **caractérisé en ce que** les extrémités (16) respectives de la paroi extérieure (6) des deux parois de la douille (5) sont en appui contre les bagues extérieures (2.2, 3.2) du palier à roulement avant ou du palier à roulement arrière.

9. Palier de roue selon l'une des revendications 3 à 8, **caractérisé en ce que** les extrémités (16) respectives de la paroi intérieure (7) des deux parois de la douille (5) sont en appui contre les bagues intérieures (2.1, 3.1) du palier à roulement avant ou du palier à roulement arrière.

10. Palier de roue selon la revendication 1, **caractérisé en ce que** deux parois (6, 7) de la douille (5) présentent des segments de paroi déformables (17) qui confèrent à la douille un comportement de ressort élastique dans le sens longitudinal, la résistance à la déformation du segment de pa-oi de la paroi extérieure (6) étant supérieure à la résistance à la déformation du segment de paroi (17) de la paroi intérieure (7).

11. Douille destinée à se monter dans un espace annulaire (5 a) ménagé entre un palier a roulement avant et un palier à roulement arrière d'un palier de roue pour un essieu de véhicule, qui est réalisée avec une double paroi avec une chambre annulaire (10, 11), formée entre ses deux parois (6, 7), qui est ouverte en direction des éléments de roulement du palier à roulement (2, 3) adjacent,
**caractérisée en ce que**
la douille est réalisée en forme de cartouche annulaire et **en ce que** l'une au moins des deux parois (6, 7) présente un segment de paroi déformable (17) qui confère à la douille un comportement de ressort élastique dans le sens longitudinal.

12. Douille selon la revendication 11, **caractérisée en ce que** les deux parois (6, 7) délimitent deux chambres annulaires (10, 11), disposées l'une à la suite de l'autre, qui sont ouvertes vers leurs faces frontales respectives.

13. Douille selon la revendication 12, **caractérisée en ce que** les parois (6, 7) de la douille sont reliées entre elles par une paroi transversale (8) qui en même temps sépare les chambres annulaires (10, 11) l'une de l'autre.

14. Douille selon la revendication 13, **caractérisée en ce que** la paroi transversale (8) est munie d'ouvertures, réparties sur sa circonférence, par le biais desquelles les chambres annulaires (10, 11) sont reliées l'une à l'autre.

15. Douille selon l'ure des revendications 11 à 14, **caractérisée en ce que** ses deux parois (6, 7) présentent des segments de paroi déformables (17) qui confèrent à la douille un comportement de ressort élastique dans le sens longitudinal, la résistance à la déformation du segment de paroi de la paroi extérieure (6) étant supérieure à la résistance à la déformation du segment de paroi (17) de la paroi intérieure (7).

16. Douille selon l'ure des revendications 11 à 15, **caractérisée en ce qu'**elle contient un remplissage d'agent lubrifiant et **en ce que** les ouvertures frontales (13) des chambres annulaires (10, 11) sont fermées au moyen d'un couvercle (18) ou d'un film retirable (19).

17. Douille selon l'une des revendications 11 à 16, **caractérisée en ce que**, pour augmenter le volume d'agent lubrifiant, l'une au moins des chambres annulaires (11) présente une chambre supplémentaire (11 a) télescopique axialement par rapport à la chambre annulaire (11).
